# EUROPEAN PATENT SPECIFICATION

(11) **EP 0 549 346 B1**
(45) Date of publication and mention of the grant of the patent: **30.10.1996**
(21) Application number: 92311763.4
(22) Date of filing: 23.12.1992
(51) Int. Cl.: G01L 23/10, G01L 9/00

(54) **Piezoelectric fluid pressure sensor**
Piezoelektrische Fluiddrucksensor
Capteur de pression de fluide piézoélectrique

(30) Priority: 24.12.1991 JP 356920/91
(43) Date of publication of application: 30.06.1993
(73) Proprietor: NGK Spark Plug Co. Ltd., Nagoya-shi, Aichi-ken (JP)
(72) Inventor: Toyoda, Hideki, c/o NGK Spark Plug Co., Ltd., Nagoya-shi, Aichi-ken (JP); Kojima, Takao, c/o NGK Spark Plug Co., Ltd., Nagoya-shi, Aichi-ken (JP); Shimozato, Hirofumi, c/o NGK Spark Plug Co., Ltd., Nagoya-shi, Aichi-ken (JP); Hayasako, Hirofumi, c/o NGK Spark Plug Co., Ltd., Nagoya-shi, Aichi-ken (JP)
(74) Representative: Cross, Rupert Edward Blount

(56) References cited:
- EP-A- 0 317 163
- EP-A- 0 450 698
- EP-A- 0 511 762
- US-A- 3 086 132

## Description

The present invention relates to a piezoelectric sensor for detecting the pressure prevailing in the vicinity of a cylinder head of an internal combustion engine.

A known piezoelectric sensor comprises a main body which is mounted on the cylinder head by threaded engagement with a threaded mounting bore provided on the cylinder head, and a detector element contained in the main body which includes a piezoelectric element and a pressure transmitting bar member. The main body has a forward end portion inserted into the cylinder head to which a diaphragm is tightly attached. The pressure in the cylinder head is transmitted through the diaphragm and the pressure transmitting bar member to the piezoelectric element which generates an electrical signal corresponding to the value of the pressure. The piezoelectric element is commonly made of ceramic material such as lead titanate zirconate or lead titanate.

It is known for such a piezoelectric sensor to be used under conditions in which it is exposed to high combustion temperatures (1000°C) as well as pressures within the cylinder head as in the case of spark plugs. Piezoelectric elements of ceramic material, lead titanate zirconate and lead titanate have Curie temperatures of about 250°C and 350°C which are lower than the combustion temperature in the cylinder body. Therefore, when a piezoelectric sensor constructed of these materials is subjected to such high combustion temperatures, it attains a temperature as high as about 400°C with the result that the piezoelectric element is apt to cause depolarization which in turn leads to a deterioration in its piezoelectric characteristics. Consequently, the use of such piezoelectric sensors under high temperature conditions should be avoided. To this end the conventional piezoelectric sensor is provided with means for cooling the piezoelectric element so that it can be maintained at a suitable temperature below its Curie temperature. However, the conventional piezoelectric sensor then has the disadvantage that the provision of such cooling means results in the sensor having a large and complicated structure and makes the overall manufacturing cost of the sensor high. Furthermore, the conventional piezoelectric sensor has another disadvantage in that it is impossible to exactly detect the pressure in the cylinder head because the piezoelectric element has a pyroelectric characteristic and a temperature dependent characteristic such that the higher the temperature increases the more electrical charges are generated.

In order to solve the disadvantages mentioned above, it has been proposed that instead of ceramic material SiO₂ a single crystal having no temperature dependent characteristic and no pyroelectric characteristic is used for the piezoelectric element. However, this proposal has the disadvantage that the resulting S/N ratio is reduced because such crystal piezoelectric materials have fewer charges that can be generated compared with ceramic material so that the piezoelectric element may be easily affected by noise from the spark plugs, radio frequency noise or other noises.

In Japanese Patent Application 3-125414 there has been proposed a piezoelectric sensor comprising a circular or rectangular sheet-shape piezoelectric element which is made of LiNbO₃, LiTaO₃ or other single crystal piezoelectric materials having the same properties as LiNbO₃ or LiTaO₃. It is supposed that a proportional relation is obtained between the generated charge and the pressure to be detected. However, the measured data shows that the actual relation is not always proportional and that a good linearity is not obtained so that the resulting pressure detection involves some error.

It is therefore an object of the present invention to provide a piezoelectric sensor capable of overcoming the disadvantages in the prior art.

According to the present invention, there is provided a piezoelectric sensor for an internal combustion engine comprising a main body adapted to be mounted on a cylinder of the engine and having an axially extending hole which is open at one end, a metal diaphragm tightly fixed to the open one end of the hole for receiving a pressure generated within the cylinder, and detector means disposed in the hole and including a piezoelectric element provided with electrodes on the both side thereof for generating an electrical signal corresponding to the pressure in the cylinder and a member for transmitting the pressure from the diaphragm to the piezoelectric element, characterized in that the piezoelectric element is made of LiNbO₃ single crystal piezoelectric material, and a pressurizing means is provided in the hole applying a pressure of 5 MPa or more to the piezoelectric element.

Preferably, the piezoelectric element may be in the form of a disc or plate-like element and made of LiNbO₃ single crystal piezoelectric material having a polarization component along a Z-axis extending in the direction of the thickness of the element which is oriented at an angle of 20° or less with respect to a plane defined by orthogonal X- and Y-axes perpendicular to the Z-axis.

Since LiNbO₃ has a Curie temperature of approximately 1200°C, the piezoelectric element made of such material has an excellent heat resisting property and hence a piezoelectric characteristic which does not deteriorate during the operation of the sensor. By mounting the piezoelectric element under a pressurized condition of 5MPa or more, the electrical charge generated becomes linear with respect to the detected pressure because a good tightness can be obtained between the surface of the piezoelectric element and the pressure receiving surface. In addition, because of the pressurized mounting of the piezoelectric element, the precision requirement of the surface of the piezoelectric element can be relaxed, thereby simplifying the manufacturing process. Furthermore, again because of the pressurised mounting of the piezoelectric element, it is possible to maintain the contact between the piezoelectric element and the electrode even when a suction loading is applied to the cylinder.

The present invention will now be described by way of example with reference to the accompanying drawings:
Fig. 1 is a longitudinal section schematically showing an embodiment of the piezoelectric sensor according to the present invention;
Fig. 2 is a perspective view schematically showing an example of a circular type piezoelectric element to be used in the sensor of Fig. 1;
Fig. 3 is a perspective view schematically showing an example of a rectangular type piezoelectric element to be used in the sensor of Fig. 1;
Fig. 4 is a perspective view showing how the piezoelectric elements are prepared;
Fig. 5 is a graph showing the relationship between a pyroelectric effect and an orientation angle of Z-axis polarization in a lithium niobate single crystal;
Fig. 6 is an explanatory view of the orientation of polarization on a XYZ coordinate system; and
Fig. 7 is a graph showing the relation between the pressure in a cylinder of an internal combustion engine and the electrical charge generated.

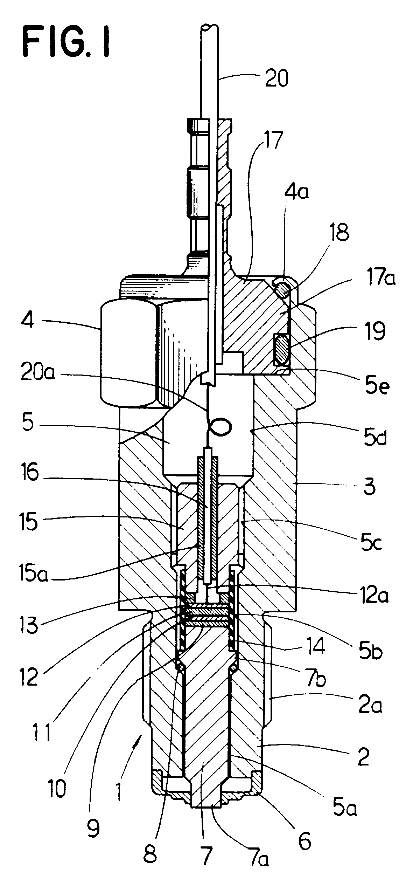

Referring to Fig. 1, there is illustrated a piezoelectric sensor in accordance with an embodiment of the present invention.

The reference numeral 1 denotes a main body made of metal which comprises a lower portion 2, an intermediate portion 3 and an upper portion 4. The lower portion 2 has an outer periphery provided with a male thread 2a which is adapted to engage a mounting threaded bore provided on a cylinder head (not shown) of an internal combustion engine. The upper portion 4 is shaped to have a hexagonal cross section so that a suitable fastening tool such as a spanner can be used when the main body 1 is attached to the cylinder head. The main body 1 is provided with an axially extending through-hole 5 which gradually increases in diameter from the lower portion 2 to the upper portion 4 so as to form first, second, third and fourth hole portions 5a, 5b, 5c and 5d. One end or lower opening of the through-hole 5 is closed by a metal diaphragm 6 which may be formed of a heat-resistant metal such as inconel, SUS 630 stainless steel or the like. The first hole portion 5a contains a pressure transmitting rod 7 which has a forward end 7a externally extended through the diaphragm 6 and a flange 7b which engages a shoulder portion between the first and second hole portions 5a and 5b via an elastic ring 8. The elastic ring 8 is intended to absorb the strain which might be generated by any difference in heat expansion and heat transmission among the respective components or the stress which may be generated by a clamping torque.

The second hole portion 5b of the hole 5 contains a stacked assembly which comprises a metal plate 9, a first terminal member 10, a piezoelectric element 11 provided with electrodes on both sides, a second terminal member 12 and an insulator ring 13. The metal plate 9 is in contact with one end or inner end of the rod 7 under a pressurized condition.

The stacked assembly is electrically insulated from the main body 1 by an insulator sheath 14. The second terminal member 12 is provided with a connector 12a which protrudes from the upper surface thereof. The third hole portion 5c is provided with a female thread with which a presser screw member 15 is engaged for applying a pressure of 5MPa or more to the piezoelectric element 11 via the insulating ring 13. The presser screw member 15 is provided with a central bore 15a through which an insulated connecting conductor 16 extends.

The fourth hole portion 5d is provided with a shoulder 5e for receiving a flange portion 17a of a metal sleeve 17 which is tightly fitted in the upper opening of the hole portion 5d by forcibly bending inwardly the annular thin edge portion 4a of the upper body portion 4 to hold a sealing ring 18 between it and the flange portion. Between the main body 1 and the metal sleeve 17 is inserted an electric contact member 19 for electrically connecting the two. The metal sleeve 17 supports a signal carrying cable 20 having a core conductor 20a which is connected to the connector 12a through the insulated connecting conductor 16 so that the cable 20 is electrically connected to one electrode of the piezoelectric element. The other electrode of the piezoelectric element 11 is grounded to the main body 1 through the first terminal member 10, the metal plate 9, pressure transmitting rod 7 and the metal diaphragm 6.

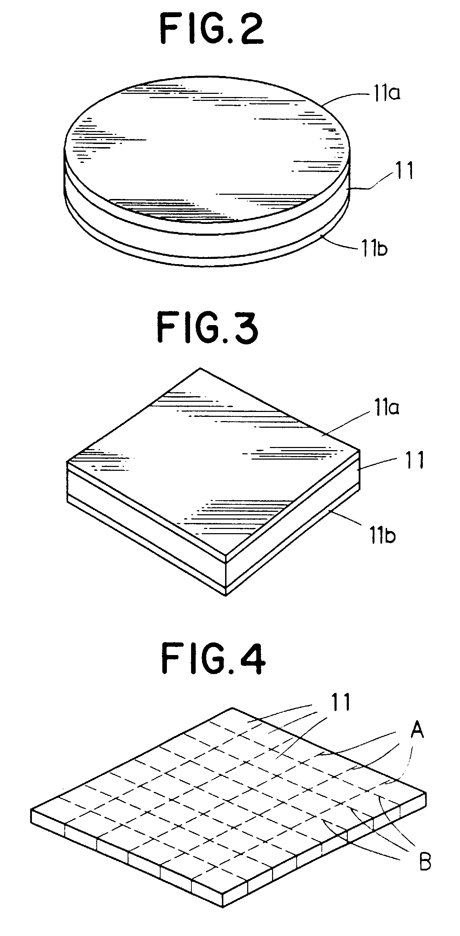

The piezoelectric element 11 may be in the form of a circular disc as shown in Fig. 2 or a square plate as shown in Fig. 3, and is provided with electrodes 11a and 11b on the opposite sides. In view of the preparation costs and productivity it is preferable to use the square plate type piezoelectric element. Fig. 4 illustrates an example of a method of preparing such square plate type piezoelectric elements. A large number of square plate type piezoelectric elements can be easily produced by cutting a large plate of LiNbO₃ single crystal piezoelectric material along a number of longitudinal and lateral cutting lines denoted by dotted lines A and B. Since the plate of LiNbO₃ single crystal piezoelectric material has a poor mechanical strength, it may be easily destroyed when being cut by conventional cutting means such as a diamond cutter, an ultra sonic cutter or a laser beam. As the result of various experiments it has been found that the plate should have a thickness of 0.3mm-1.5mm. This is because if the thickness of the plate is more than 1.5mm, the plate may crack due to a thermal shock which is generated on cutting. On the other hand, if the thickness of the plate is less than 0.3mm, the plate may be affected by a mechanical shock on cutting. Further, since the pressure sensor incorporating such a plate should have an exactly finished parallel surface for receiving a pressure, it is often necessary to polish the surface. It is, therefore, preferable that the plate has a thickness of more than 0.3 mm but less than 1.0 mm.

The electrodes 11a and 11b on the piezoelectric element 11 may be formed by plating, vacuum deposition or any other suitable method. In order to improve the adhesion of the electrodes to the piezoelectric element, the formation of the electrodes 11a and 11b is preferably performed by printing and baking with an ink containing nickel, silver, or the like dispersed in an organic medium. In which case, after the printing of the electrodes on both surfaces using the ink, the first and second terminal members 10 and 12 may be respectively superposed thereon and the assembly baked together. In this way it is possible to obtain excellent electrical contacts between the piezoelectric element 11 and each electrode, and between each electrode and the corresponding terminal member thereby making it possible to avoid any contact failure.

It will now be described how the pyroelectric characteristic of the piezoelectric element of LiNbO₃ single crystal material can depend on the dimension and cut angle thereof.

By cutting LiNbO₃ single crystal material along various directions there were prepared a number of piezoelectric element samples each having an outer diameter of 6mm and a thickness of 0.5mm but different cut angles and a number of piezoelectric element samples each having an outer diameter of 4mm and a thickness of 0.7mm but different cut angles.

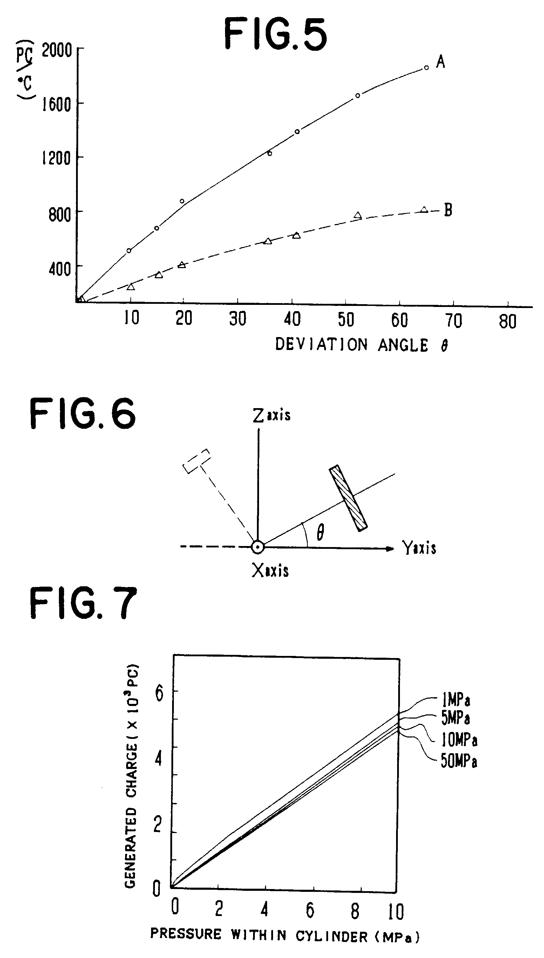

The element samples were alternately immersed in a tank containing 0°C water and in a tank containing 150°C silicone oil to test their pyroelectric characteristics. The test results are shown in Fig. 5 as a graph showing the relationship between the electric charge generated by a change of temperature (ordinate) and the degree θ of the Z-axis component of the polarization (abscissa). The degree θ of the Z-axis component of the polarization is defined as shown in Fig. 6, and represents the deviation angle of the polarization direction from the plane (X-Y plane) toward the direction of the thickness (Z-axis direction). When 0 is 90°, the polarization direction is parallel to the direction of the thickness. When the θ is 0°, the polarization direction is parallel to the plane of the element.

In Fig. 5, curve A represents the characteristic of the piezoelectric element samples having an outer diameter of 6mm and a thickness of 0.5mm, while curve B represents the piezoelectric element samples having an outer diameter of 4mm and a thickness of 0.7mm. As will be appreciated from the graph of Fig. 5, it is preferred that the Z-component or 0 be small. It will also be appreciated that an angle θ of 20° or less is preferable for attaining a pressure sensitivity of 10 atm. or less. Most preferable is an angle θ of 10° or less for a pressure sensitivity of 5 atm. or less. In this case, filtering in a circuit becomes easy and good piezoelectric characteristics can be obtained.

Piezoelectric element samples having no Z-axis component (θ = 0) shown little pyroelectricity and, thus, exhibit excellent characteristics. Among the samples having no Z-axis component (θ = 0) and cut along Y-- and X-axes, those cut along the Y-axis shown better piezoelectric characteristics than those cut along the X-axis and were found to have good mechanical properties.

For example, the pressure sensor may comprise a piezoelectric element made of a tip of LiNbO₃ single crystal material cut along the Y-axis direction and having an outer diameter of 5mm and a thickness of 0.5mm, and a diaphragm having an outer diameter of 9mm, an inner diameter of 7mm and a thickness of 0.15mm.

In order to investigate the influence of pressurization upon the piezoelectric element there were prepared four piezoelectric sensor samples and their respective piezoelectric elements were pressurized by the screw member 15 at 1 MPa, 5 MPa, 10 MPa and 50 MPa. With the sensor samples mounted on the respective cylinders of an internal combustion engine having the nominal specification of a total cylinder volume of 2000cc, the relation between the generated charge and the pressure within the cylinder is shown in Fig. 7. As can be seen, with the sensor sample pressurized at 1 MPa, the relation between the generated charge and the pressure within the cylinder has a poor linearity and is thus not represented by a linear function. This means that such a sensor is likely to involve some error in detected value. With the sensor sample pressurized at 5 MPa, the relation shows slight non-linearity when the pressure within the cylinder is 2 MPa, but this is insignificant and so the detection accuracy is not substantially affected. With the sensor samples pressurized at 10 MPa and 50 MPa, a good linearity is obtained in the relation between the generated charge and the pressure within the cylinder. It will therefore be appreciated that the piezoelectric element should be pressurized to at least 5 MPa or more to ensure a good detecting accuracy.

As illustrated and described above, by forming a piezoelectric element using LiTaO₃ single crystal material having a Curie temperature higher than the combustion temperature in the cylinder(s) of an internal combustion engine, the sensor of the present invention has the advantage that no cooling means is required for the piezoelectric element unlike the case of the conventional pressure sensor.

Also, by pressurizing the piezoelectric element at 5 MPa or more, an improved linearity can be achieved in the relation between the generated charge and the pressure to be detected so that any detecting error can possibly be reduced.

Further, by providing a piezoelectric element having a polarization component along the ofZ-axis direction which is oriented at an angle of 20° or less, the piezoelectric element has a small pyroelectric characteristic.

The present invention can therefore provide a pressure sensor of a small size which is reliable in operation and cheap.

## Claims

1. A piezoelectric sensor for an internal combustion engine comprising a main body (1) adapted to be mounted on a cylinder of the engine and having an axially extending hole (5) which is open at one end, a metal diaphragm (6) tightly fixed to the open one end of the hole (5) for receiving a pressure generated within the cylinder, and detector means disposed in the hole (5) and including a piezoelectric element (11) provided with electrodes (11a, 11b) on the both sides thereof for generating an electrical signal corresponding to the pressure in the cylinder and a member (7) for transmitting the pressure from the diaphragm (6) to the piezoelectric element (11), characterized in that the piezoelectric element (11) is made of LiNbO₃ single crystal piezoelectric material, and a pressurizing means (13,15) is provided in the hole (5) applying a pressure of 5 MPa or more to the piezoelectric element (11).

2. A piezoelectric sensor according to claim 1, wherein said piezoelectric element (11) is in the form of a disc or plate-like element and is made of LiNbO₃ single crystal piezoelectric material having a polarization component along a Z-axis extending in the direction of the thickness of the element which is oriented at an angle of 20° or less with respect to a plane defined by orthogonal X- and Y-axes perpendicular to the Z-axis.

3. A piezoelectric sensor according to claim 1, wherein said pressurizing means (13,15) comprises a screw member (15) which is engaged with the hole (5).

## Patentansprüche

1. Piezoelektrischer Sensor für einen Verbrennungsmotor mit einem Hauptkörper (1), der für die Montage auf einem Zylinder des Motors angepaßt ist, und eine sich axial erstreckende Bohrung (5) aufweist, welche an einem Ende offen ist, einer Metallmembrane (6), die dicht auf dem offenen Ende der Bohrung (5) für die Aufnahme eines innerhalb des Zylinders erzeugten Druckes befestigt ist, und einer Detektoreinrichtung, die in der Bohrung (5) angeordnet ist und ein piezoelektrisches Element (11), das mit Elektroden (lla, llb) an seinen beiden Seiten versehen ist, um ein elektrisches Signal zu erzeugen, das dem Druck in dem Zylinder entspricht, und ein Element (7) zum Übertragen des Druckes von der Membran (6) an das piezoelektrische Element (11) aufweist, dadurch gekennzeichnet, daß das piezoelektrische Element (11) aus einem piezoelektrischen LiNbO₃-Einkristall-Material besteht und eine Druckbeaufschlagungseinrichtung (13, 15) in der Bohrung (5) vorgesehen ist, um einen Druck von 5 MPa oder mehr auf das piezoelektrische Element (11) auszuüben.

2. Piezoelektrischer Sensor nach Anspruch 1, wobei das piezoelektrische Element (11) in der Form einer Scheibe oder eines plattenförmigen Elementes vorliegt und aus einem piezoelektrischen LiNbO₃-Einkristall-Material besteht, das eine Polarisationskomponente entlang einer Z-Achse aufweist, die sich in der Richtung der Dicke des Elementes erstreckt, welches in einem Winkel von 20° oder weniger bezogen auf eine Ebene angeordnet ist, die durch orthogonale X-Y-Achsen senkrecht zu der Z-Achse definiert ist.

3. Piezoelektrischer Sensor nach Anspruch 1, wobei die Druckbeaufschlagungseinrichtung (13, 15) ein Schraubenelement (15) aufweist, welches mit der Bohrung (5) in Eingriff steht.

## Revendications

1. Capteur piézoélectrique pour un moteur à combustion interne, comprenant un corps principal (1) conçu pour se monter sur un cylindre du moteur et comportant un trou s'étendant axialement (5) qui est ouvert à une extrémité, un diaphragme métallique (6) étroitement fixé à l'extrémité ouverte du trou (5) pour recevoir une pression produite dans le cylindre, et un moyen détecteur disposé dans le trou (5) et comprenant un élément piézoélectrique (11) pourvu, de chacun de ses côtés, d'électrodes (11a, 11b) pour produire un signal électrique correspondant à la pression dans le cylindre, et un élément (7) pour transmettre la pression depuis le diaphragme (6) à l'élément piézoélectrique (11) ; caractérisé en ce que l'élément piézoélectrique (11) est fait d'une matière piézoélectrique monocristalline à base de LiNbO₃, et en ce qu'un moyen de pressurisation (13, 15), appliquant une pression d'au moins 5 MPa à l'élément piézoélectrique (11), est placé dans le trou (5).

2. Capteur piézoélectrique selon la revendication 1, dans lequel ledit élément piézoélectrique (11) a la forme d'un disque ou d'un élément de type plat et est fait d'une matière piézoélectrique monocristalline à base de LiNbO₃ ayant une composante de polarisation suivant un axe Z, s'étendant dans la direction de l'épaisseur de l'élément, qui est orientée à un angle d'au plus 20° par rapport à un plan défini par des axes X et Y orthogonaux, perpendiculaires à l'axe Z.

3. Capteur piézoélectrique selon la revendication 1, dans lequel ledit moyen de pressurisation (13, 15) comprend un élément à vis (15) qui est en prise avec le trou (5).
